(19) Europäisches Patentamt / European Patent Office / Office européen des brevets

(11) **EP 2 425 106 B1**

(12) **EUROPEAN PATENT SPECIFICATION**

(45) Date of publication and mention of the grant of the patent:
**14.03.2018 Bulletin 2018/11**

(51) Int Cl.:
*F01N 3/20* *(2006.01)*     *F01N 9/00* *(2006.01)*
*F02D 41/24* *(2006.01)*     *F02D 41/14* *(2006.01)*

(21) Application number: **10770031.2**

(22) Date of filing: **28.04.2010**

(86) International application number:
**PCT/SE2010/050467**

(87) International publication number:
**WO 2010/126439 (04.11.2010 Gazette 2010/44)**

(54) **SYSTEM FOR CONTROL OF THE INJECTION OF REDUCING AGENT AND METHOD FOR DETERMINATION OF REGULATING PARAMETERS OF A REGULATOR WHICH FORMS PART OF SUCH A SYSTEM**

SYSTEM ZUR STEUERUNG DER INJEKTION EINES REDUKTIONSMITTELS UND VERFAHREN ZUR BESTIMMUNG DER REGELPARAMETER EINES REGLERS EINES DERARTIGEN SYSTEMS

SYSTÈME PERMETTANT DE RÉGLER L'INJECTION D'UN AGENT RÉDUCTEUR ET PROCÉDÉ PERMETTANT DE DÉTERMINER LES PARAMÈTRES DE RÉGULATION D'UN RÉGULATEUR FAISANT PARTIE DUDIT SYSTÈME

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.04.2009 SE 0900586**

(43) Date of publication of application:
**07.03.2012 Bulletin 2012/10**

(73) Proprietor: **Scania CV AB (publ)**
**151 87 Södertälje (SE)**

(72) Inventor: **WESTERBERG, Björn**
**S-151 48 Södertälje (SE)**

(74) Representative: **Scania CV AB**
**Patents, GP 117kv**
**151 87 Södertälje (SE)**

(56) References cited:
EP-A1- 1 653 058          EP-A1- 1 706 607
WO-A1-2005/068797          WO-A1-2009/036780
WO-A2-2008/009940          US-A1- 2006 000 202
US-A1- 2006 042 234          US-A1- 2006 042 234

**Description**

FIELD OF THE INVENTION, AND PRIOR ART

The present invention relates to a method according to the preamble of claim 1 for determination of regulating parameters of a regulator which forms part of a system for controlling the injection of reducing agent upstream of a catalyst in an exhaust line from a combustion engine. The invention relates also to a system according to the preamble of claim 7 for controlling the injection of reducing agent upstream of a catalyst in an exhaust line from a combustion engine. The invention relates further to a computer programme product comprising computer programme code for implementing a method according to the invention, and to an electronic control unit.

To meet prevailing exhaust cleaning requirements, today's motor vehicles are usually provided with a catalyst in the exhaust line to effect catalytic conversion of environmentally hazardous constituents of the exhaust gases to environmentally less hazardous substances. A method which has been employed for achieving effective catalytic conversion is based on injecting a reducing agent into the exhaust gases upstream of the catalyst. A reductive substance which forms part of, or is formed by, the reducing agent is carried by the exhaust gases into the catalyst, in which it is adsorbed on active seats in the catalyst, resulting in accumulation of the reductive substance in the catalyst. The accumulated reductive substance may either be desorbed, i.e. released from the active seats, or react with and thereby convert an exhaust substance to a non-hazardous substance. Such a reduction catalyst may for example be of SCR (selective catalytic reduction) type. This type of catalyst is hereinafter called SCR catalyst. An SCR catalyst selectively reduces $NO_x$ in the exhaust gases but not the sulphur in the exhaust gases. In the case of an SCR catalyst, a reducing agent in the form of urea or ammonia is usually injected into the exhaust gases upstream of the catalyst. The injection of urea into the exhaust gases results in the formation of ammonia and it is this ammonia that constitutes the reductive substance which assists the catalytic conversion in the SCR catalyst. The ammonia accumulates in the catalyst by being adsorbed on active seats in the catalyst, and $NO_x$ present in the exhaust gases is converted to nitrogen and water when it is brought into contact in the catalyst with accumulated ammonia on the active seats in the catalyst.

When using a reduction catalyst in combination with dosage of reducing agent it is important to control the injection of the reducing agent so that desired conversion of the respective exhaust substance is achieved without too large amounts of unconsumed reductive substance leaving the catalyst along with the exhaust gases and thereby being discharged to the environment. The consumption and cost of the reducing agent can thus be minimised while at the same time preventing or at least minimising undesirable discharges of the reductive substance to the environment. For example, ammonia is a reductive substance which is toxic and malodorous, so it is desirable as far as possible to minimise discharges of this ammonia to the environment, while at the same time maintaining sufficient injection of reducing agent, e.g. in the form of urea, to achieve required conversion of the respective exhaust substance, in this case $NO_x$.

When a catalyst of the type here concerned is used, present-day practice is that the injection of reducing agent is usually controlled by means of two-dimensional charts, each chart being related to a certain exhaust temperature. The respective charts contain values for the amount of reducing agent to be injected into the exhaust line at the prevailing load and speed of the respective combustion engine. Each chart therefore has engine load on a first axis and engine speed on a second axis. These charts are compiled empirically by plotting the respective combustion engine and catalyst on the basis of steady-state performance. Such plotting has to be done for each specific combination of combustion engine and catalyst, and this known solution also involves comprehensive test runs and settings for each specific combination of engine type and catalyst type. Any changes in, for example, the engine's emissions entail comprehensive and troublesome changes to all the values in the charts. As the charts give dosage adapted to steady-state conditions, dynamic compensations are needed when operating conditions change quickly. A further disadvantage of this known solution is that despite dynamic compensations there is the possible occurrence of operating conditions which the charts do not cover, which may lead to incorrect dosage of reducing agent.

A known practice from, for example, EP 1 706 607 A1 in a system for controlling the injection of reducing agent is to use calculated values from a computation model which, while catering for the expected reactions in the catalyst in prevailing operating conditions, continuously determines current states in the catalyst, e.g. the accumulation of reductive substance in various parts of the catalyst and the conversion of exhaust substance which takes place in various parts of the catalyst. The system according to EP 1 706 607 A1 uses the values from the computation model inter alia to determine actual values and set-point values for the accumulation of reductive substance in the catalyst, and a regulator controlling the injection of reducing agent delivers a control signal which depends on the match between the prevailing actual value and the set-point value. One of the advantages of using a computation model of said type is that it need only be adapted to the catalyst and can therefore be independent of the configuration of the combustion engine connected to the catalyst. It is also possible to use a scalable computation model which is easily adaptable to the dimensions of the catalyst. EP 1 706 607 A1 does not describe how the regulating parameters of the regulating system's regulator or regulators are determined.

OBJECT OF THE INVENTION

The object of the present invention is to propose a novel and advantageous way of determining the regulating parameters of a regulator which forms part of a system for controlling the injection of reducing agent upstream of a catalyst in an exhaust line from a combustion engine, and which, on the basis of a signal which is delivered by a comparator and depends on the match between an actual and a set-point value of a variable related to the function of the catalyst and affected by the reducing agent injection, generates a control signal which acts upon the injection of reducing agent.

SUMMARY OF THE INVENTION

According to the invention, said object is achieved by a method having the features defined in claim 1 and a system having the features defined in claim 7.
The solution according to the invention comprises

- the influence of the reducing agent injection on said variable being approximated as a first-order process with an amplification factor and a time constant, to which end instantaneous values of this amplification factor and this time constant are determined on the basis of information from a computation model which, while catering for the expected reactions in the catalyst in the respective operating conditions, continuously determines current states in the catalyst, e.g. the accumulation in various parts of the catalyst of a reductive substance which forms part of, or is formed by, the reducing agent and the conversion of exhaust substance which takes place in various parts of the catalyst under the influence of the reductive substance, and
- instantaneous values of regulating parameters of the regulator being determined on the basis of the thus determined values of said amplification factor and time constant.

By continuously determining the process dynamics which are characterised by said amplification factor and time constant, and by adapting the regulator's regulating parameters to the prevailing process dynamics, it is possible to arrive at regulating parameters which result in rapid and robust regulation of the reducing agent injection and more effective utilisation of the catalyst and injected reducing agent, making it possible to reduce reducing agent consumption and to use a catalyst with reduced catalyst volume.
Other advantageous features of the method and system according to the invention are indicated by the dependent claims and the description set out below.
The invention relates also to a computer programme product having the features defined in claim 12 and an electronic control unit having the features defined in claim 14.

BRIEF DESCRIPTION OF THE DRAWINGS

The invention is described in more detail below on the basis of embodiment examples with reference to the attached drawings, in which

Fig. 1    is a schematic diagram of a combustion engine with an associated catalyst and a system according to the present invention,

Fig. 2    is a block diagram illustrating a system according to an embodiment of the invention,

Fig. 3    is a schematic diagram of an electronic control unit for implementing a method according to the invention, and

Fig. 4    is a flowchart illustrating a method according to an embodiment of the invention.

DETAILED DESCRIPTION OF EMBODIMENTS

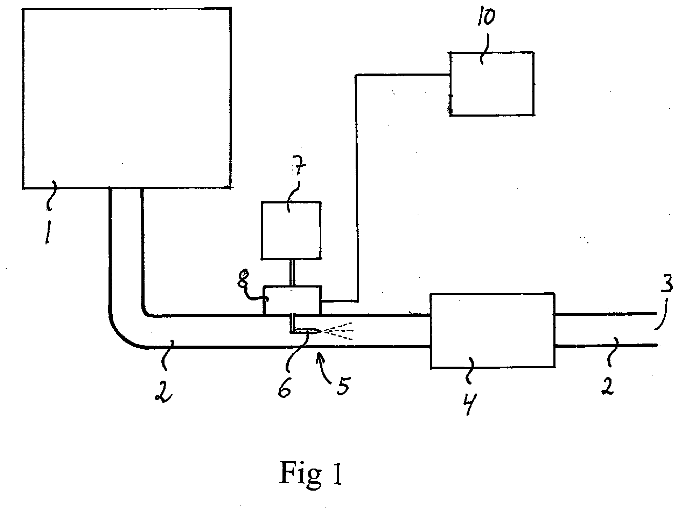

Fig. 1 depicts schematically a combustion engine 1 provided with a system 10 according to the present invention. The exhaust gases leaving the combustion engine 1 pass through an exhaust line 2 and reach the environment via an exhaust outlet 3. A reduction catalyst 4, preferably in the form of an SCR catalyst, is provided in the exhaust line 2. The exhaust gases from the combustion engine 1 are thus caused to pass through this catalyst 4 before they reach the environment via the exhaust outlet 3. There is an injection point 5 for reducing agent in the exhaust line 2 upstream of the catalyst 4. The injection of reducing agent is effected by an injection device comprising one or more injection means 6 arranged in the exhaust line in the form of injection nozzles or the like, and a storage container 7 connected thereto for reducing agent. The injection device further comprises a dosing unit 8 comprising a dosing arrangement and a regulating means, e.g. a regulating valve or the like, adapted to regulating the supply of reducing agent to said injection means 6. The dosing unit 8 is controlled by a system 10 according to the present invention which determines the amounts of reducing agent to be injected into the exhaust gases.

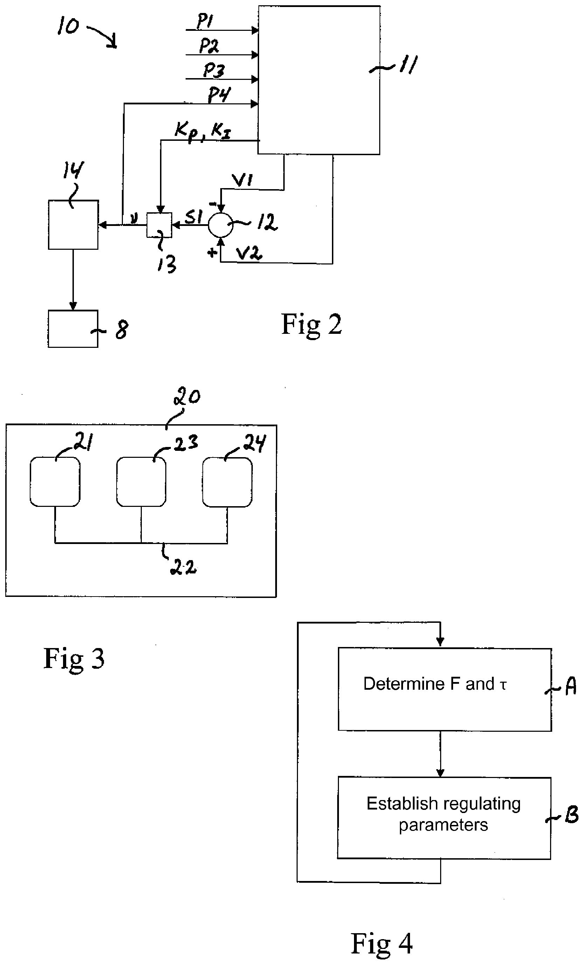

Fig. 2 illustrates schematically an embodiment of a system 10 according to the invention. The system 10 comprises an electronic calculation means 11 adapted to using a computation model to continuously determine current states in the catalyst 4 while catering for the expected reactions in the catalyst in prevailing operating conditions. The computation model takes into account the expected exothermic and endothermic reactions in the catalyst 4 in prevailing operating conditions and calculates inter alia the accumulation of the respective reductive substance in various parts of the catalyst and the conversion of the respective exhaust substance which takes place in various parts of the catalyst under the influence of the reductive substance. The computation model may be of any desired configuration provided that it gives with required accuracy correct values for the accumulation of reductive substance and the conversion of exhaust substance in the catalyst.

The system 10 further comprises a comparator 12 adapted to comparing an actual value V1 and a set-point value V2 of a variable which is related to the function of the catalyst and is affected by the reducing agent injection, and to generating a signal S1 which represents the match between that actual value V1 and that set-point value V2. In the example illustrated, the calculation means 11 is adapted to determining said actual value V1 and set-point value V2 on the basis of information from the aforesaid computation model and, and the comparator 12 is therefore in this case adapted to receiving information from the calculation means 11 about the prevailing actual value V1 and set-point value V2. The comparator 12 is adapted to comparing the actual value V1 and the set-point value V2 and to delivering a signal S1 which depends on the match, e.g. the difference, between that actual value V1 and set-point value V2. The system 10 comprises also a regulator 13 adapted to generating, on the basis of said signal S1 from the comparator 12, a control signal v which acts upon the injection of reducing agent. The regulator 13 takes with advantage the form of a PI regulator but might alternatively take the form of an Otto Smith regulator. In the example illustrated, the regulator 13 is adapted to delivering the control signal v to an electronic control means 14 connected to the dosing unit 8 of the injection device and adapted to controlling this dosing unit on the basis of said control signal v so that an amount of reducing agent appropriate to prevailing conditions is injected into the exhaust line 2.

The calculation means 11 is adapted to approximating the influence of the reducing agent injection on the aforesaid variable as a first-order process with an amplification factor F and a time constant $\tau$. The calculation means 11 is further adapted to determining instantaneous values of this amplification factor F and this time constant $\tau$ on the basis of information from said computation model, and to determining thereafter instantaneous values of regulating parameters of said regulator 13 on the basis of the thus determined values of said amplification factor F and time constant $\tau$.

In the example illustrated in Fig. 2, the regulator 13 takes the form of a PI regulator, and the regulating parameters which in this case are determined by the calculation means 11 on the basis of the respective values of said amplification factor F and time constant $\tau$ are the PI regulator's P amplification $K_p$ and I amplification $K_I$.

The calculation means 11, the comparator 12, the regulator 13 and the control means 14 are with advantage integrated in a common computer unit which may, if considered advantageous, be implemented in the form of two or more separate units connected to one another.

The solution according to the invention might also be applied to regulation in the form of so-called cascade regulation, e.g. of the type described in EP 1 706 607 A1, with an inner regulating circuit comprising a first regulator and an outer regulating circuit comprising a second regulator. In that case, regulating parameters of both of the regulators may be determined in the manner described above.

Fig. 4 is a flowchart illustrating an embodiment of a method according to the present invention for determination of regulating parameters of a regulator 13 which forms part of a system for controlling the injection of reducing agent upstream of a catalyst 4 in an exhaust line 2 from a combustion engine 1, e.g. of a motor vehicle, and which, on the basis of a signal S1 which is delivered by a comparator 12 and depends on the match between an actual value V1 and a set-point value V2 of a variable related to the function of the catalyst and affected by the reducing agent injection, generates a control signal v which acts upon the injection of reducing agent. The influence of the reducing agent injection on said variable is approximated as a first-order process with an amplification factor F and a time constant $\tau$. A first step A determines instantaneous values of said amplification factor F and said time constant $\tau$ on the basis of information from a computation model which, while catering for the expected reactions in the catalyst 4 in the respective operating conditions, continuously determines current states in the catalyst, e.g. the accumulation in various parts of the catalyst of a reductive substance which forms part of, or is formed by, the reducing agent, and the conversion of exhaust substance which takes place in various parts of the catalyst under the influence of the reductive substance. A subsequent step B determines instantaneous values of regulating parameters of the regulator 13 on the basis of the thus determined values of said amplification factor F and time constant τ. The aforesaid steps A and B are performed repetitively.

Computer programme code for implementing a method according to the invention is with advantage included in a computer programme which can be read into the internal memory of computer, e.g. the internal memory of an electronic control unit of a motor vehicle. Such a computer programme is with advantage provided via a computer programme product comprising a data storage medium which is readable by an electronic control unit and which has the computer programme stored on it. Said data storage medium is for example an optical data storage medium in the form of a CD ROM disc, a DVD disc etc., a magnetic data storage medium in the form of a hard disc, a diskette, a cassette tape etc., or a flash memory or a memory of the ROM, PROM, EPROM or EEPROM type.

A computer programme according to an embodiment of the invention comprises computer programme code for causing the calculation means 11 of a system 10 of the type described above to

- approximate the influence of the reducing agent injection on the aforesaid variable as a first-order process with an amplification factor F and a time constant τ,
- determine instantaneous values of this amplification factor F and this time constant τ on the basis of information from the aforesaid computation model, and
- determine instantaneous values of regulating parameters of the regulator 13 on the basis of the thus determined values of said amplification factor F and time constant τ.

The determination of said regulating parameters on the basis of the amplification factor F and the time constant τ is done by conventional calculation methods well known to one skilled in the art. If the regulator 13 is a PI regulator, it is for example possible to use so-called lambda tuning for this purpose.

Fig. 3 illustrates very schematically an electronic control unit 20 comprising an execution means 21, e.g. a central processor unit (CPU), for execution of computer software. The execution means 21 communicates with a memory 23, e.g. of the RAM type, via a data bus 22. The control unit 20 comprises also data storage medium 24, e.g. in the form of a flash memory or a memory of the ROM, PROM, EPROM or EEPROM type. The execution means 21 communicates with the data storage medium 24 via the data bus 22. A computer programme comprising computer programme code for implementing a method according to the invention, e.g. in accordance with the embodiment illustrated in Fig. 4, is stored on the data storage medium 24.

The reducing agent takes preferably the form of urea ($CO(NH_2)_2$) but may also take the form of, for example, ammonia ($NH_3$) or hydrocarbon (fuel). In the description set out below, it is assumed that the catalyst 4 is an SCR catalyst and that a reducing agent in the form of urea or ammonia is used. It should however be noted that the solution according to the invention is not limited to this type of reduction catalyst and this type of reducing agent. The injection of urea into the exhaust gases results in the formation of ammonia and it is this ammonia that constitutes the reductive substance which assists the catalytic conversion in the SCR catalyst. In this case the respective exhaust substance takes the form of $NO_x$.

The aforesaid computation model is with advantage configured to use the following input values:

a) The exhaust temperature P1 upstream of the catalyst 4. This temperature may be determined by means of temperature sensors or in any of the conventional ways for calculating it.

b) The $NO_x$ concentration P2 in the exhaust gases upstream of the catalyst 4. This concentration may be determined by means of sensors but is with advantage determined in any of the conventional ways for calculating it, e.g. on the basis of the combustion engine's load, speed, injection angle, i.e. the angle of the combustion engine's crankshaft during the injection of fuel into the engine cylinder, and, where applicable, EGR (exhaust gas recirculation) content, i.e. the amount of exhaust gases led back to the engine.

c) The exhaust mass flow P3 through the catalyst 4. This exhaust mass flow may be determined by means of mass flow sensors but is with advantage determined in any of the conventional ways for calculating it, e.g. on the basis of the combustion engine's load and speed.

d) Amounts P4 of reducing agent injected into the exhaust gases. This value is with advantage obtained from the control means 14 or from the regulator 13. In the example illustrated in Fig. 2, the control signal v from the regulator 13 is used as a measure of amounts of reducing agent injected.

The computation model may also use as input values the $O_2$ concentration in the exhaust gases upstream of the SCR catalyst and/or the ambient temperature. The $O_2$ concentration may be determined by means of, for example, lambda sensors but is with advantage determined in any of the conventional ways for calculating it, e.g. on the basis of the combustion engine's load, speed and, where applicable, EGR content.

A description is set out below of a configuration of a computation model which may be used to obtain information for the calculation of said amplification factor F and time constant $\tau$ in a method and system according to the present invention.

In an SCR catalyst, nitrogen oxide $NO_x$ reacts with ammonia and is reduced to nitrogen gas. $No_x$ is the harmful exhaust substance intended to be removed from the exhaust gases, and ammonia is the reductive substance used for the purpose. Ammonia or urea (the latter converts to ammonia) is injected into the exhaust gases upstream of the SCR catalyst.

The method uses information from a catalyst model to determine the static and dynamic response to a change in the dosage of reducing agent (urea). The method therefore comprises two elements: a static and a dynamic element. The description is based on the catalyst model being formulated as a tank series model in which the active material in the respective tanks is divided into layers. The catalyst model comprises the following reactions:

$$Urea + H_2O \rightarrow 2NH_3 + CO_2 \qquad (1)$$

$$S + NH_3 \rightarrow S\text{-}NH_3 \qquad (2)$$

$$S\text{-}NH_3 \rightarrow S + NH_3 \qquad (3)$$

$$4S\text{-}NH_3 + 4NO + O_2 \rightarrow 4S + 6H_2O + 4N_2 \qquad (4)$$

$$4S\text{-}NH_3 + 5O_2 \rightarrow 4S + 6H_2O + 4NO \qquad (5)$$

The model comprises urea decomposition (reaction (1)) from dosage point to the catalyst. The model applies the simplification of regarding the isocyanic acid (HNCO) formed by decomposition of urea as equivalent to ammonia.

The urea decomposition is regarded as a homogeneous reaction with the reaction rate

$$r_{u,k} = k_{u,k} \cdot c_{tot,k} \cdot y_{Urea,k,0} \qquad (6)$$

Other reactions are catalytic. The reaction rate for adsorption of ammonia in tank k and layer n is expressed as

$$r_{a,k,n} = k_{a,k} \cdot c_{tot,k} \cdot y_{NH_3,k,n} \cdot \left(1 - \theta_{k,n}\right) \qquad (7)$$

The reaction rate for desorption of ammonia in tank k and layer n is expressed as

$$r_{d,k,n} = k_{d,k} \cdot \theta_{k,n} \qquad (8)$$

The reaction rate for $NO_x$ reduction in tank k and layer n is expressed as

$$r_{r,k,n} = k_{r,k} \cdot c_{tot,k} \cdot y_{NO_x,k,n} \cdot \theta_{k,n} \qquad (9)$$

The reaction rate for ammonia oxidation in tank k and layer n is expressed as

$$r_{o,k,n} = k_{o,k} \cdot c_{tot,k} \cdot \theta_{k,n} \qquad (10)$$

The rate constant for both homogeneous and catalytic reactions is determined from the Arrhenius equation as

$$k_{i,k} = k_{0,i} \cdot e^{-\frac{E_{A,i}}{R \cdot T_{s,k}}} \qquad (11)$$

The total gas concentration is determined from the general gas law

$$c_{tot,k} = \frac{P_k}{R \cdot T_{s,k}} \tag{12}$$

The total pressure $P_k$ may be added to the pressure after the catalyst, which is equal to atmospheric pressure if the catalyst is positioned last in the exhaust system. For a more accurate value, the pressure drop from the respective tank to the end of the catalyst is calculated from formulae for lamina flow in a channel and is added to the pressure after the catalyst. If the catalyst is not last in the system, the pressure may be measured or calculated from pressure drops across the unit or units situated after the catalyst.

For the catalyst, the following material balance for the gas flow may be set up for substance i

$$F \cdot \left( y_{i,k-1,0} - y_{i,k,0} \right) - \Gamma_{i,k,0} \cdot \left( y_{i,k,0} - y_{i,k,1} \right) + \sum_j v_{i,j} \cdot r_{h,j,k} \cdot V_k = 0 \tag{13}$$

The following material balance may be set up for the gas phase in layer n for substance i (disregarding homogeneous reactions):

$$\Gamma_{i,k,n-1} \cdot \left( y_{i,k,n-1} - y_{i,k,n} \right) - \Gamma_{i,k,n} \cdot \left( y_{i,k,n} - y_{i,k,n+1} \right) + \sum_j v_{i,j} \cdot r_{c,j,k,n} \cdot w_{k,n} = 0 \tag{14}$$

For the innermost layer the second term drops out as follows:

$$\Gamma_{i,k,N-1} \cdot \left( y_{i,k,N-1} - y_{i,k,N} \right) + \sum_j v_{i,j} \cdot r_{c,j,k,N} \cdot w_{k,N} = 0 \tag{15}$$

The material balances for the gas flow and for the gas phase in the active layers constitute an equation system from which mole fractions for the various substances in the gas flow and in the gas phase in the active layers are determined. The mass transport coefficient for transport between the gas flow and the first layer is determined as

$$\Gamma_{i,k,0} = \frac{A_{ch,k} \cdot c_{tot,k}}{\dfrac{1}{k_{c,i,k}} + \dfrac{0.5 \cdot \Delta x_1}{D_{eff,i,k}}} \tag{16}$$

The mass transport coefficient for transport between layers is determined as

$$\Gamma_{i,k,n} = \frac{2 \cdot D_{eff,i,k} \cdot A_{ch,k} \cdot c_{tot,k}}{\Delta x_n + \Delta x_{n+1}} \tag{17}$$

The film transport coefficient is determined as

$$k_{c,i,k} = \frac{Sh \cdot D_{i,k}}{d} \tag{18}$$

For the Sherwood number $S_h$, asymptotic values for the respective channel geometry may be used. The ordinary diffusivity is determined as

$$D_{i,k} = D_{ref,i} \cdot \left[ \frac{T_{s,k}}{T_{ref}} \right]^{1.75} \tag{19}$$

The Knudsen diffusivity is determined as

$$D_{K,i,k} = \frac{d_p}{3} \cdot \sqrt{\frac{8 \cdot R \cdot T_{s,k}}{\pi \cdot M_i}} \qquad (20)$$

The effective diffusivity is determined as

$$D_{eff,i,k} = \frac{f_D}{\frac{1}{D_{i,k}} + \frac{1}{D_{K,i,k}}} \qquad (21)$$

The time-dependent material balance for adsorbed ammonia gives the time derivative for degree of coverage as

$$\frac{d\theta_{k,n}}{dt} = \frac{1}{N_c} \cdot \sum_j \nu_{S-NH_3,j} \cdot r_{c,j,k,n} \cdot w_{k,n} \qquad (22)$$

The degree of coverage at each time is thereafter integrated on the basis of the time derivative. The temperature of the gas flow through the catalyst is determined by solving a heat balance which takes into account the heat transferred to the solid material and the reaction heat for homogeneous reactions. The effect from the reaction heat for homogeneous reactions is determined as

$$Q_{h,k} = \sum_j r_{h,k} V_k \left(-\Delta H_{h,j}\right) \qquad (23)$$

The heat balance for the gas flow is thereafter solved by

$$T_{g,k} = \frac{F_{tot} \cdot c_{p,g} \cdot T_{g,k-1} + h_k \cdot A_{ch,k} \cdot T_{s,k} + Q_{h,k}}{F_{tot} \cdot c_{p,g} + h_k \cdot A_{ch,k}} \qquad (24)$$

in which the transfer coefficient for heat is determined as

$$h_k = \frac{Nu \cdot \lambda_g}{d} \qquad (25)$$

For the Nusselt number *Nu,* asymptotic values for the respective channel geometry may be used. The effect from the reaction heat for catalytic reactions is determined as

$$Q_{c,k} = \sum_n \sum_j r_{c,j,k,n} \, w_{k,n} \cdot (-\Delta H_{c,j}) \qquad (26)$$

The time-dependent heat balance for the solid material in the catalyst gives the time derivative for temperature as

$$\frac{dT_{s,k}}{dt} = \frac{1}{m_{s,k} \cdot c_{p,s}} \left(h_k \cdot A_{ch,k} \cdot (T_{g,k} - T_{s,k}) + Q_{c,k}\right) \qquad (27)$$

The temperature at each time is thereafter integrated on the basis of the time derivative. The derivations of static and dynamic response entail using the total degree of urea conversion, which is determined from current mole fractions in the catalyst model as

$$x_{tot,Urea,k} = \begin{cases} 1 & y_{dos} = 0 \\[2ex] 1 - \dfrac{y_{Urea,k}}{y_{dos}} & y_{dos} > 0 \end{cases} \tag{28}$$

### Static response

The static response is determined by static material balances for the gas flow and for the gas phase in the outermost layer. The influence from reactions in other layers is catered for by using an effectiveness factor for internal mass transport, which is determined from the reaction rate for $NO_x$ reduction as

$$\eta_{p,k} = \frac{\sum\limits_{n=1}^{N} r_{c,r,k,n} \cdot w_{k,n}}{r_{c,r,k,1} \cdot \sum\limits_{n=1}^{N} w_{k,n}} = \frac{\sum\limits_{n=1}^{N} y_{NO_x,k,n} \cdot \theta_{k,n} \cdot w_{k,n}}{y_{NO_x,k,1} \cdot \theta_{k,1} \cdot \sum\limits_{n=1}^{N} w_{k,n}} \tag{29}$$

The effectiveness factor for internal mass transport depends primarily on temperature and may therefore be determined beforehand and set out in chart form or equation form as a function of temperature. The derivation also uses an effectiveness factor for external mass transport which is defined as

$$\eta_{i,k} = \frac{y_{i,k,1}}{y_{i,k,0}} \tag{30}$$

A simplification used is the approximation of regarding the effectiveness factor for external mass transport as the same for $NO_x$ and for ammonia:

$$\eta_k \approx \eta_{NO_x,k} \approx \eta_{NH_3,k} \tag{31}$$

The effectiveness factor for external mass transport may be determined from current mole fractions for $NO_x$ or from equilibrium mole fractions when determining the dynamic response below. The continued derivation of static response involves using only mole fractions for the gas flow, so the index n is supposed to be zero and is omitted. For mole fractions in the outermost layer, the product of the mole fraction in the gas flow and the effectiveness factor for external transport is used.

As the dosage of urea depends on the $NO_x$ concentration in the exhaust gases and on the exhaust flow, the stoichiometric ratio between dosed urea and $NO_x$ in the exhaust gases before the catalyst is a relevant magnitude for the dosage. A stoichiometric ratio of one (1) means that the same amount of urea is dosed as would theoretically be used for reducing all of the $NO_x$. The stoichiometric ratio may be expressed as

$$\nu = \frac{2 \cdot y_{dos}}{y_{NO_x,0}} \tag{32}$$

A static material balance between the dosing point and tank k gives the following relationship between converted urea, reduced $NO_x$ and ammonia:

$$y_{dos} = \frac{1}{2 \cdot x_{tot,Urea,k}} \cdot \left( y_{NO_x,0} - y_{NO_x,k} + y_{NH_3,k} \right) \tag{33}$$

A number of auxiliary variables are defined as follows:

$$A_k = k_{a,k} \cdot c_{tot,k} \tag{34}$$

$$B_k = -\nu_r \cdot k_{r,k} \cdot c_{tot,k} \tag{35}$$

$$C_k = -\nu_r \cdot k_{r,k} \cdot c_{tot,k} \cdot \eta_{p,k} \cdot \sum_{n=1}^{N} w_{k,n} \tag{36}$$

The local degree of $NO_x$ conversion in tank k may be expressed as

$$x_{NO_x,k} = 1 - \frac{y_{NO_x,k}}{y_{NO_x,k-1}} = \frac{C_k \cdot \eta_k \cdot \theta_k}{F + C_k \cdot \eta_k \cdot \theta_k} \tag{37}$$

The total degree of $No_x$ conversion may be expressed as

$$x_{tot,NO_x} = 1 - \prod_{k=1}^{K} \left(1 - x_{NO_x,k}\right) \tag{38}$$

The mole fraction of $NO_x$ in tank k may be expressed as

$$y_{NO_x,k} = y_{NO_x,0} \cdot \prod_{p=1}^{k} \left(1 - x_{NO_x,p}\right) = y_{NO_x,0} \cdot \frac{F}{F + C_k \cdot \eta_k \cdot \theta_k} \cdot \prod_{p=1}^{k-1} \left(1 - x_{NO_x,p}\right) \tag{39}$$

The steady-state degree of coverage of ammonia may be expressed (disregarding the influence of ammonia oxidation) as

$$\theta_k = \frac{A_k \cdot \eta_k \cdot y_{NH_3,k}}{A_k \cdot \eta_k \cdot y_{NH_3,k} + k_{d,k} + B_k \cdot \eta_k \cdot y_{NO_x,k}} \tag{40}$$

If the mole fraction for ammonia is solved out, the result is

$$y_{NH_3,k} = \frac{\left(k_{d,k} + B_k \cdot \eta_k \cdot y_{NO_x,k}\right) \cdot \theta_k}{A_k \cdot \eta_k \cdot \left(1 - \theta_k\right)} = \frac{\left(k_{d,k} + B_k \cdot \eta_k \cdot y_{NO_x,0} \cdot \prod_{p=1}^{k} \left(1 - x_{NO_x,p}\right)\right) \cdot \theta_k}{A_k \cdot \eta_k \cdot \left(1 - \theta_k\right)} \tag{41}$$

The stoichiometric ratio may then be expressed as a function of the degree of coverage in tank k as

$$\nu = \frac{1}{x_{tot,Urea,k}} \cdot \left\{ 1 - \frac{y_{NO_x,k}}{y_{NO_x,0}} + \frac{y_{NH_3,k}}{y_{NO_x,0}} \right\} = \frac{1}{x_{tot,Urea,k}} \cdot \left\{ 1 + \frac{y_{NH_3,k}}{y_{NO_x,0}} - \prod_{p=1}^{k} \left(1 - x_{NO_x,p}\right) \right\} =$$
$$\frac{1}{x_{tot,Urea,k}} \cdot \left\{ 1 + \frac{k_{d,k} \cdot \theta_k}{A_k \cdot \eta_k \cdot \left(1 - \theta_k\right) \cdot y_{NO_x,0}} + \left( \frac{B_k \cdot \theta_k}{A_k \cdot \left(1 - \theta_k\right)} - 1 \right) \cdot \frac{F}{F + C \cdot \eta_k \cdot \theta_k} \prod_{p=1}^{k-1} \left(1 - x_{NO_x,p}\right) \right\} \tag{42}$$

The stoichiometric ratio expressed in relation to the mole fraction of $NO_x$ in tank k gives

$$\nu = \frac{1}{x_{tot,Urea,k} \cdot y_{NO_x,0}} \cdot \left\{ y_{NO_x,0} + \frac{k_{d,k} \cdot \theta_k}{A_k \cdot \eta_k \cdot (1-\theta_k)} + \left( \frac{B_k \cdot \theta_k}{A_k \cdot (1-\theta_k)} - 1 \right) \cdot y_{NO_x,k} \right\} \qquad (43)$$

Deriving the expression for the stoichiometric ratio with respect to degree of coverage produces

$$\frac{\partial \nu}{\partial \theta_k} = \frac{1}{x_{tot,Urea,k}} \cdot \left\{ \begin{array}{l} \dfrac{k_{d,k}}{A_k \cdot \eta_k \cdot (1-\theta_k)^2 \cdot y_{NO_x,0}} + \\[2ex] F \cdot \left( \dfrac{B_k \cdot (F + C_k \cdot \eta_k \cdot \theta_k^2)}{A_k \cdot (1-\theta_k)^2 \cdot (F + C_k \cdot \eta_k \cdot \theta_k)^2} + \dfrac{C \cdot \eta_k}{(F + C \cdot \eta_k \cdot \theta_k)^2} \right) \cdot \prod_{p=1}^{k-1} (1 - x_{NO_x,p}) \end{array} \right\} \qquad (44)$$

This partial derivative describes the relationship between a change in the stoichiometry and the degree of coverage in tank k provided that no changes take place in the intermediate tanks 1 to k-1. The static response is reflected by the relationship between a change in the stoichiometry and the degree of coverage in tank k, taking changes in intermediate tanks into account. The static response is therefore given by the total derivative determined as

$$\frac{d\nu}{d\theta_k} = \left\{ \begin{array}{ll} \dfrac{\partial \nu}{\partial \theta_1} & k = 1 \\[3ex] \dfrac{\partial \nu}{\partial \theta_k} + \dfrac{d\nu}{d\theta_{k-1}} \cdot \left( \dfrac{\partial \theta_{k-1}}{\partial \theta_k} \right)_\nu & k > 1 \end{array} \right. \qquad (45)$$

in which the partial derivative of the degree of coverage in tank k-1 with respect to degree of coverage in tank k at constant stoichiometry is determined as

$$\left( \frac{\partial \theta_{k-1}}{\partial \theta_k} \right)_\nu = \left( \frac{\partial y_{NO_x,k-1}}{\partial y_{NO_x,k}} \right)_\nu \cdot \frac{\dfrac{\partial y_{NO_x,k}}{\partial \theta_k}}{\dfrac{\partial y_{NO_x,k-1}}{\partial \theta_{k-1}}} \qquad (46)$$

in which the partial derivative of mole fractions of $NO_x$ in tank k-1 with respect to mole fractions of $NO_x$ in tank k at constant stoichiometry is determined (via derivation of stoichiometry with respect to mole fractions of $NO_x$ at constant degree of coverage) as

$$\left( \frac{\partial y_{NO_x,k-1}}{\partial y_{NO_x,k}} \right)_\nu = \frac{\left( \dfrac{\partial \nu}{\partial y_{NO_x,k}} \right)_\theta}{\left( \dfrac{\partial \nu}{\partial y_{NO_x,k-1}} \right)_\theta} = \frac{x_{tot,Urea,k-1}}{x_{tot,Urea,k}} \cdot \frac{\dfrac{B_k \cdot \theta_k}{A_k \cdot (1-\theta_k)} - 1}{\dfrac{B_{k-1} \cdot \theta_{k-1}}{A_{k-1} \cdot (1-\theta_{k-1})} - 1} \qquad (47)$$

The derivative of mole fractions of $NO_x$ with respect to degree of coverage in tank k is given by

$$\frac{\partial y_{NO_x,k}}{\partial \theta_k} = -y_{NO_x,0} \cdot \frac{F \cdot C_k \cdot \eta_k}{(F + C_k \cdot \eta_k \cdot \theta_k)^2} \cdot \prod_{p=1}^{k-1} (1 - x_{NO_x,p}) \qquad (48)$$

The derivative of mole fractions of $NO_x$ with respect to degree of coverage in tank k-1 is given by

$$\frac{\partial y_{NO_x,k-1}}{\partial \theta_{k-1}} = -y_{NO_x,0} \cdot \frac{F \cdot C_{k-1} \cdot \eta_{k-1}}{(F + C_{k-1} \cdot \eta_{k-1} \cdot \theta_{k-1})^2} \cdot \prod_{p=1}^{k-2}(1 - x_{NO_x,p}) \qquad (49)$$

Static response in local degree of $NO_x$ conversion with respect to stoichiometry may be determined by

$$\frac{dx_{NO_x,k}}{dv} = \frac{\dfrac{dx_{NO_x,k}}{d\theta_k}}{\dfrac{dv}{d\theta_k}} \qquad (50)$$

in which the derivative of degree of conversion with respect to degree of coverage is determined by

$$\frac{dx_{NO_x,k}}{d\theta_k} = \frac{F \cdot C_k \cdot \eta_k}{(F + C_k \cdot \eta_k \cdot \theta_k)^2} \qquad (51)$$

Static response in total degree of $NO_x$ conversion with respect to stoichiometry may be determined by

$$\frac{dx_{tot,NO_x}}{dv} = \sum_{k=1}^{K} \frac{dx_{NO_x,k}}{dv} \cdot \frac{dx_{tot,NO_x}}{dx_{NO_x,k}} \qquad (52)$$

in which the derivative of total degree of $NO_x$ conversion with respect to local degree of $NO_x$ conversion is determined as

$$\frac{dx_{tot,NO_x}}{dx_{NO_x,k}} = \frac{1 - x_{tot,NO_x}}{1 - x_{NO_x,k}} \qquad (53)$$

### Dynamic response

Determining the dynamic response involves first determining the equilibrium degree of coverage towards which the catalyst is heading with current dosage. This is followed by determining the rate at which the degree of coverage changes. The time constant is determined finally from the change from current degree of coverage to equilibrium degree of coverage and the rate of change. As the dynamics are quickest for the outermost layer, the layers within the outermost layer are regarded as static and the equilibrium degree of coverage for the outermost layer is determined on that basis.

The first step is to determine the equivalent mole fraction of ammonia in the respective tank by

$$y_{f,eq,k} = 2 \cdot y_{dos} \cdot (x_{tot,Urea,k} - x_{tot,Urea,k-1}) + y_{NH_3,k-1} \qquad (54)$$

From the material balance for the gas flow, the following expression may be taken for the equilibrium mole fraction from the respective tank:

$$y_{eq,k} = \frac{F \cdot y_{f,eq,k} + \Gamma_{NH_3,k,0} \cdot y_{s,eq,k}}{F + \Gamma_{NH_3,k,0}} \qquad (55)$$

The aggregate of the reaction terms for ammonia in gas phase in the active layers is desorption minus adsorption. Equilibrium is reflected by the reaction rate for $NO_x$ reduction multiplied by the stoichiometric coefficient for adsorbed ammonia. For the outermost layer this means

$$\sum_j \nu_{NH_3,j} \cdot r_{c,j,k,1} \cdot w_{k,1} = \nu_{S-NH_3,r} \cdot k_{r,k} \cdot c_{tot,k} \cdot y_{s,NO_x,k} \cdot \theta_{eq,k} \cdot w_{k,1} = -B_k \cdot y_{s,NO_x,k} \cdot \theta_{eq,k} \cdot w_{k,1} \qquad (56)$$

For the equilibrium degree of coverage the following expression may be set up:

$$\theta_{eq,k} = \frac{A_k \cdot y_{s,eq,k}}{A_k \cdot y_{s,eq,k} + k_{d,k} + B_k \cdot y_{s,NO_x,k}}$$ (57)

By regarding the layers within the outermost layer as static, the following material balance for the outermost layer may be set up:

$$\Gamma_{NH_3,k,0} \cdot \left( \frac{F \cdot y_{f,eq,k} + \Gamma_{NH_3,k,0} \cdot y_{s,eq,k}}{F + \Gamma_{NH_3,k,0}} - y_{s,eq,k} \right) - \Gamma_{NH_3,k,1} \cdot \left( y_{s,eq,k} - y_{NH_3,k,2} \right) -$$

$$\frac{A_k \cdot y_{s,eq,k} \cdot B_k \cdot y_{s,NO_x,k} \cdot w_{k,1}}{A_k \cdot y_{s,eq,k} + k_{d,k} + B_k \cdot y_{s,NO_x,k}} = 0$$ (58)

This material balance results in a second-degree equation with respect to the equilibrium mole fraction for ammonia in the first layer. The mole fraction of $NO_x$ in the first layer really depends on the solution, but may with good results be approximated with current mole fraction of $NO_x$ in the first layer:

$$y_{s,NO_x,k} \approx y_{NO_x,k,1}$$ (59)

The second-degree equation may be expressed as

$$Q_2 \cdot y_{s,eq,k}^2 + Q_1 \cdot y_{s,eq,k} + Q_0 = 0$$ (60)

in which the coefficients are

$$Q_0 = -\left\{ \Gamma_{NH_3,k,0} \cdot F \cdot y_{f,eq,k} + \left( F + \Gamma_{NH_3,k,0} \right) \cdot \Gamma_{NH_3,k,1} \cdot y_{NH_3,k,2} \right\} \cdot \left( k_{d,k} + B_k \cdot y_{NO_x,k,1} \right)$$ (61)

$$Q_1 = -\Gamma_{NH_3,k,0} \cdot \left( A_k \cdot y_{s,eq,k} + k_{d,k} + B_k \cdot y_{s,NO_x} \right)$$
$$- \left( F + \Gamma_{NH_3,k,0} \right) \cdot \left\{ \Gamma_{NH_3,k,1} \cdot \left( A_k \cdot y_{NH_3,k,2} + k_{d,k} + B_k \cdot y_{NO_x,k,1} \right) + A_k \cdot B_k \cdot y_{NO_x,k,1} \cdot w_{k,1} \right\}$$ (62)

$$Q_2 = \left\{ \Gamma_{NH_3,k,0} \cdot F + \left( F + \Gamma_{NH_3,k,0} \right) \cdot \Gamma_{NH_3,k,1} \cdot \right\} \cdot A_k$$ (63)

The equilibrium mole fraction is determined from the positive solution of the second-degree equation as

$$y_{s,eq,k} = -\frac{Q_1}{2 \cdot Q_2} + \sqrt{\left( \frac{Q_1}{2 \cdot Q_2} \right)^2 - \frac{Q_0}{Q_2}}$$ (64)

The equilibrium degree of coverage is then arrived at by placing the equilibrium mole fraction in the equation for the equilibrium degree of coverage. The rate of change of the degree of coverage is determined from the catalyst model and is limited so that it is always greater than a smallest permissible value as follows:

$$\Delta r_k = \begin{cases} \Delta r_{min} & \left| \dfrac{d\theta_k}{dt} \right| \leq \dfrac{N_c \cdot \left| \theta_{eq,k} - \theta_k \right|}{\alpha \cdot \tau_{max}} \\[4mm] \left| \dfrac{d\theta_k}{dt} \right| & \left| \dfrac{d\theta_k}{dt} \right| > \dfrac{N_c \cdot \left| \theta_{eq,k} - \theta_k \right|}{\alpha \cdot \tau_{max}} \end{cases} \qquad (65)$$

The time constant for change of degree of coverage may then be determined as

$$\tau_k = \frac{N_c \cdot \left| \theta_{eq,k} - \theta_k \right|}{\alpha \cdot \Delta r_k} \qquad (66)$$

The parameter $\alpha$ describes the factor multiplied by the time constant which describes the time needed for the whole build-up process of a step response. For a truly first-order process, four time constants are needed for 99% of the change to be achieved. As the respective process is not a truly first-order process, the parameter $\alpha$ needs also to make clear the deviation from the first order. A suitable value of $\alpha$ which gives a good match at the beginning of the response is of the order of 0.5 to 1.

A weighted time constant which describes the dynamic response for the whole catalyst may be determined as follows: an expression for total response as a function of the response in each tank is set up as

$$\Delta x_{tot,NO_x}(t) = \sum_{k=1}^{K} \frac{dx_{tot,NO_x}}{dx_{NO_x,k}} \cdot \frac{dx_{NO_x,k}}{dv} \cdot \left( 1 - e^{-\frac{t}{\tau_k}} \right) \cdot \Delta v \qquad (67)$$

A corresponding expression for a first-order response is set up as

$$\Delta x_{tot,NO_x}(t) = \frac{dx_{tot,NO_x}}{dv} \cdot \left( 1 - e^{-\frac{t}{\tau_{tot}}} \right) \cdot \Delta v \qquad (68)$$

Deriving the two expressions and setting them equal to one another at time zero produces

$$\tau_{tot} = \frac{\dfrac{dx_{tot,NO_x}}{dv}}{\displaystyle\sum_{k=1}^{K} \dfrac{dx_{tot,NO_x}}{dx_{NO_x,k}} \cdot \dfrac{dx_{NO_x,k}}{dv} \cdot \dfrac{1}{\tau_k}} \qquad (69)$$

In a case where the actual value V1 and the set-point value V2 taken into account by the comparator 12 refer to the degree of coverage of ammonia in a part of the catalyst 4 which corresponds to a tank k of the tank series model, the aforesaid amplification factor F may be taken to correspond to $\dfrac{d\theta_k}{dv}$, the inverse of which is given by formula (45) above, and the aforesaid time constant $\tau$ is set to correspond to $\tau_k$ which is given by formula (66) above.

In a case where the actual value V1 and the set-point value V2 taken into account by the comparator 12 refer to the degree of $NO_x$ conversion in the catalyst 4, the aforesaid amplification factor F may be set to correspond to $\dfrac{dx_{tot,NO_x}}{dv}$ which is given by formula (52) above, and the aforesaid time constant $\tau$ may be set to correspond to $\tau_{tot}$, which is given by formula (69) above.

The variables and indices used in the formulae set out above have the following meanings:

| Variable | Meaning |
| --- | --- |
| A | Area / temporary variable |
| B | Temporary variable |
| C | Temporary variable |
| D | Diffusivity |
| E | Activation energy |
| F | Exhaust mole flow |
| M | Mole mass |
| Nu | Nusselt number |
| P | Total pressure |
| Q | Effect / temporary variable |
| R | General gas constant |
| S | Active seat |
| Sh | Sherwood number |
| T | Temperature |
| V | Gas volume in catalyst channel |
| c | Concentration / specific heat |
| d | Channel size |
| h | Heat transfer coefficient |
| k | Rate constant / pre-exponent / mass transfer coefficient |
| m | Catalyst mass |
| r | Reaction rate |
| t | Time |
| y | Mole fraction |
| w | Mass of active material |
| x | Degree of conversion |
| r | Mass transport coefficient |
| $\Delta H$ | Reaction enthalpy |
| $\Delta x$ | Layer thickness |
| $\eta$ | Effectiveness factor |
| $\lambda$ | Thermal conductivity |
| $\nu$ | Stoichiometric coefficient / stoichiometric ratio |
| $\theta$ | Degree of coverage (dimensionless accumulation) |
| $\tau$ | Time constant |

| Index | Meaning |
| --- | --- |
| K | Number of tanks / last tank |
| N | Number of layers / innermost layer / number of active seats |
| a | Adsorption |
| c | Catalytic / mass transfer |
| ch | Channel |
| d | Desorption |
| dos | Dosage |
| eff | Effective |
| g | Gas phase |
| h | Homogeneous |
| i | Substance i |
| j | Reaction j |
| k | Tank k |
| n | Layer n |

(continued)

| Index | Meaning |
|---|---|
| o | Ammonia oxidation |
| p | Pore / product index |
| r | $NO_x$ reduction |
| ref | Reference |
| s | Surface |
| tot | Total |
| u | Urea decomposition |

As will be appreciated by a specialist within the field, the calculation method set out above may be modified in many different ways and it is also possible to use some other type of calculation method than that set out above for calculating the aforesaid amplification factor F and time constant $\tau$. A change which may be made is to use only one layer of active material, in which case the same derivation as above may be used by setting transport terms between the first and second layers to zero and setting the effectiveness factor for internal mass transport to one. Another change which may be made is to add reactions for $NO_2$ in order to be able to cater for a possible oxidation catalyst upstream of the SCR catalyst.

The invention is of course likewise not limited in other respects to the embodiments described above, since many possibilities for modification thereof are likely to be obvious to a specialist in the field without thereby having to deviate from the invention as defined in the attached claims. The exhaust system may for example comprise at least one catalyst connected in series with the reduction catalyst 4, e.g. an oxidation catalyst and/or a hydrolysis catalyst upstream of the reduction catalyst and/or a slip catalyst downstream of the reduction catalyst. The exhaust system may also comprise a particle filter connected in series with the reduction catalyst 4 upstream or downstream of the latter.

**Claims**

1. A method for determination of regulating parameters of a regulator (13) which forms part of a system (10) for controlling the injection of reducing agent upstream of a catalyst (4) in an exhaust line (2) from a combustion engine (1) and which, on the basis of a signal (S1) which is delivered by a comparator (12) and depends on the match between an actual value (V1) and a set-point value (V2) of a variable related to function of the catalyst and affected by the reducing agent injection, generates a control signal (v) which acts upon the injection of reducing agent, **characterised**

   - **by** the influence of the reducing agent injection on said variable being approximated as a first-order process with an amplification factor (F) and a time constant ($\tau$), to which end instantaneous values of this amplification factor and this time constant are determined on the basis of information from a computation model which, while catering for the expected reactions in the catalyst in the respective operating conditions, continuously determines current states in the catalyst, e.g. the accumulation in various parts of the catalyst of a reductive substance which forms part of, or is formed by, the reducing agent and the conversion of exhaust substance which takes place in various parts of the catalyst under the influence of the reductive substance, and
   - by instantaneous values of said regulating parameters being determined on the basis of the thus determined values of said amplification factor (F) and time constant ($\tau$).

2. A method according to claim 1, **characterised in that** said regulator (13) is a PI regulator and said regulating parameters are the PI regulator's P amplification ($K_p$) and I amplification ($K_I$).

3. A method according to claim 1, **characterised in that** said regulator (13) is an Otto Smith regulator.

4. A method according to any one of claims 1-3, in which the catalyst (4) is an SCR catalyst and urea or ammonia is used as reducing agent, **characterised in that** said variable is the degree of coverage of ammonia in the catalyst (4) or in part of it.

5. A method according to any one of claims 1-3, in which the catalyst (4) is an SCR catalyst and urea or ammonia is used as reducing agent, **characterised in that** said variable is the degree of $NO_x$ conversion in catalyst (4).

**6.** A method according to any one of claims 1-5, **characterised in that** at least the following input values are used in the computation model in generating information for determination of said amplification factor (F) and time constant ($\tau$) :

- the exhaust temperature (P1) upstream of the catalyst,
- the $NO_x$ concentration (P2) in the exhaust gases upstream of the catalyst,
- the exhaust mass flow (P3) through the catalyst, and
- injected amounts (P4) of reducing agent.

**7.** A system for controlling the injection of reducing agent upstream of a catalyst in an exhaust line from a combustion engine, which system (10) comprises

- a comparator (12) adapted to comparing an actual value (V1) and a set-point value (V2) of a variable which is related to the function of the catalyst and is affected by the reducing agent injection, and to generating a signal (S1) which represents the match between that actual value (V1) and that set-point value (V2),
- a regulator (13) adapted to generating, on the basis of said signal (S1) from the comparator (12), a control signal (v) which acts upon the injection of reducing agent, and
- an electronic calculation means (11) adapted to using a computation model to continuously determine current states in the catalyst while taking into the account the expected reactions in the catalyst in prevailing operating conditions, **characterised in that** said computation model is adapted to
- approximating the influence of the reducing agent injection on said variable as a first-order process with an amplification factor (F) and a time constant ($\tau$),
- determining instantaneous values of this amplification factor (F) and this time constant ($\tau$) on the basis of information from said computation model, and
- determining instantaneous values of regulating parameters of the regulator (13) on the basis of the thus determined values of said amplification factor (F) and time constant ($\tau$).

**8.** A system according to claim 7, **characterised in that** said regulator (13) is a PI regulator and said regulating parameters are the PI regulator's P amplification ($K_p$) and I amplification ($K_I$).

**9.** A system according to claim 7, **characterised in that** said regulator (13) is an Otto Smith regulator.

**10.** A system according to any one of claims 7-9, in which the catalyst is an SCR catalyst and urea or ammonia is used as reducing agent, **characterised in that** said variable is the degree of coverage of ammonia in the catalyst or in part of it.

**11.** A system according to any one of claims 7-9, in which the catalyst is an SCR catalyst and urea or ammonia is used as reducing agent, **characterised in that** said variable is the degree of $NO_x$ conversion in the catalyst.

**12.** A computer programme product comprising computer programme code for causing a system which is configured for controlling the injection of reducing agent upstream of a catalyst in an exhaust line from a combustion engine and which comprises

- a comparator (12) adapted to comparing an actual value (V1) and a set-point value (V2) of a variable which is related to the function of the catalyst and is affected by the reducing agent injection, and to generating a signal (S1) which represents the match between that actual value (V1) and that set-point value (V2),
- a regulator (13) adapted to generating, on the basis of said signal (S1) from the comparator (12), a control signal (v) which acts upon the injection of reducing agent, and
- an electronic calculation means (11) adapted to using a computation model to continuously determine current states in the catalyst while catering for the expected reactions in the catalyst in prevailing operating conditions, **characterised in that** said computation model is caused to

- approximate the influence of the reducing agent injection on the aforesaid variable as a first-order process with an amplification factor (F) and a time constant ($\tau$),
- determine instantaneous values of this amplification factor (F) and this time constant ($\tau$) on the basis of information from said computation model, and
- determine instantaneous values of regulating parameters of the regulator (13) on the basis of the thus determined values of said amplification factor (F) and time constant ($\tau$).

**13.** A computer programme product according to claim 12, <u>**characterised in that**</u> the computer programme product comprises a data storage medium which is readable by an electronic control unit, said computer programme code being stored on the data storage medium.

**14.** An electronic control unit for a motor vehicle, comprising an execution means (21), a memory (23) connected to the execution means and a data storage medium (24) connected to the execution means, the computer programme code of a computer programme product according to claim 12 being stored on said data storage medium (24).

**Patentansprüche**

**1.** Verfahren zur Bestimmung der Regelparameter eines Reglers (13), der Bestandteil eines Systems (10) zum Steuern der Einspritzung eines Reduktionsmittels stromaufwärts eines Katalysators (4) in einer von einem Verbrennungsmotor (1) abgehenden Abgasleitung (2) bildet, und der auf Basis eines Signals (S1), das von einem Komparator (12) geliefert wird und von der Übereinstimmung zwischen einem tatsächlichen Wert (V1) und einem Sollwert (V2) einer Variablen abhängt, die mit der Funktion des Katalysators in Beziehung steht und durch die Einspritzung des Reduktionsmittels betroffen ist, und der ein Steuersignal (v) erzeugt, das eine Wirkung auf die Einspritzung des Reduktionsmittels ausübt,
**gekennzeichnet**

- **durch** den Einfluss der Reduktionsmitteleinspritzung auf die Variable, die als ein Prozess erster Ordnung mit einem Verstärkungsfaktor (F) und einer Zeitkonstante ($\tau$) angenähert wird, wozu Momentanwerte dieses Verstärkungsfaktors und dieser Zeitkonstante auf Basis von Informationen von einem Rechenmodell bestimmt werden, das, während die erwarteten Reaktionen im Katalysator bei den jeweiligen Betriebsbedingungen berücksichtigt werden, die jeweiligen Zustände im Katalysator laufend bestimmt, z. B. die Ansammlung einer reduktiven Substanz in verschiedenen Teilen des Katalysators, die Teil des Reduktionsmittels ist oder von diesem gebildet wird, und die Umwandlung der im Abgas enthaltenen Substanzen, die in verschiedenen Teilen des Katalysators unter dem Einfluss der reduktiven Substanz stattfindet,

und

- **durch** Momentanwerte der Regelparameter, die auf Basis der so bestimmten Werte des Verstärkungsfaktors (F) und der Zeitkonstante ($\tau$) bestimmt werden.

**2.** Verfahren nach Anspruch 1, **dadurch gekennzeichnet, dass** der Regler (13) ein PI-Regler ist und die Regelparameter die P-Verstärkung ($K_p$) und die I-Verstärkung ($K_I$) des PI-Reglers sind.

**3.** Verfahren nach Anspruch 1, **dadurch gekennzeichnet, dass** der Regler (13) ein Otto-Smith-Regler ist.

**4.** Verfahren nach einem der Ansprüche 1 bis 3, wobei der Katalysator (4) ein SCR-Katalysator ist und Harnstoff oder Ammoniak als Reduktionsmittel verwendet wird, **dadurch gekennzeichnet, dass** die Variable der Ammoniak-Bedeckungsgrad im Katalysator (4) oder in einem Teil davon ist.

**5.** Verfahren nach einem der Ansprüche 1 bis 3, wobei der Katalysator (4) ein SCR-Katalysator ist und Harnstoff oder Ammoniak als Reduktionsmittel verwendet wird, **dadurch gekennzeichnet, dass** die Variable der Grad der Umwandlung von $NO_x$ im Katalysator (4) ist.

**6.** Verfahren nach einem der Ansprüche 1 bis 5, **dadurch gekennzeichnet, dass** mindestens die folgenden Eingangswerte im Rechenmodel bei der Erzeugung von Informationen zur Bestimmung des Verstärkungsfaktors (F) und der Zeitkonstante ($\tau$) verwendet werden:

- die Abgastemperatur (P1) stromaufwärts des Katalysators,
- die $NO_x$-Konzentration (P2) in den Abgasen stromaufwärts des Katalysators,
- der Abgas-Massendurchsatz (P3) durch den Katalysator, und
- eingespritzte Mengen (P4) des Reduktionsmittels.

**7.** System zum Steuern der Einspritzung eines Reduktionsmittels stromaufwärts eines Katalysators in einer von einem Verbrennungsmotor abgehenden Abgasleitung, wobei das System (10) aufweist

- einen Komparator (12), der zum Vergleichen eines tatsächlichen Wertes (V1) mit einem Sollwert (V2) einer Variablen eingerichtet ist, die mit der Funktion des Katalysators in Beziehung steht und durch die Einspritzung des Reduktionsmittels betroffen ist, und zum Erzeugen eines Signals (S), das die Übereinstimmung zwischen dem tatsächlichen Wert (V1) und dem Sollwert (V2) repräsentiert,

- einen Regler (13), der zum Erzeugen eines Steuersignals (v) auf Basis des Signals (S1) vom Komparator (12) eingerichtet ist, das auf die Reduktionsmitteleinspritzung eine Wirkung ausübt, und

- ein elektronisches Berechnungsmittel (11), das ein Rechenmodell verwendet, um kontinuierlich aktuelle Zustände im Katalysator zu bestimmen, wobei die erwarteten Reaktionen im Katalysator bei den vorherrschenden Betriebsbedingungen berücksichtigt werden,

**dadurch gekennzeichnet, dass** das Rechenmodell eingerichtet ist zum

- Annähern des Einflusses der Reduktionsmitteleinspritzung auf die Variable als ein Prozess erster Ordnung mit einem Verstärkungsfaktor (F) und einer Zeitkonstante ($\tau$),

- Bestimmen von Momentanwerten dieses Verstärkungsfaktors (F) und dieser Zeitkonstante ($\tau$) auf Basis der vom Rechenmodell erhaltenen Informationen, und

- Bestimmen von Momentanwerten der Regelparameter des Reglers (13) auf Basis der so bestimmten Werte des Verstärkungsfaktors (F) und der Zeitkonstante ($\tau$).

8. System nach Anspruch 7, **dadurch gekennzeichnet, dass** der Regler (13) ein PI-Regler ist und die Regelparameter die P-Verstärkung ($K_p$) und die I-Verstärkung ($K_I$) des PI-Reglers sind.

9. System nach Anspruch 7, **dadurch gekennzeichnet, dass** der Regler (13) ein Otto-Smith-Regler ist.

10. System nach einem der Ansprüche 7 bis 9, wobei der Katalysator ein SCR-Katalysator ist und Harnstoff oder Ammoniak als Reduktionsmittel verwendet wird, **dadurch gekennzeichnet, dass** die Variable der Ammoniak-Bedeckungsgrad im Katalysator (4) oder in einem Teil davon ist.

11. System nach einem der Ansprüche 7 bis 9, wobei der Katalysator ein SCR-Katalysator ist und Harnstoff oder Ammoniak als Reduktionsmittel verwendet wird, **dadurch gekennzeichnet, dass** die Variable der Grad der Umwandlung von $NO_x$ im Katalysator (4) ist.

12. Computerprogrammprodukt, das einen Computerprogrammcode aufweist, um ein zum Steuern der Einspritzung eines Reduktionsmittels stromaufwärts eines Katalysators in einer von einem Verbrennungsmotor abgehenden Abgasleitung konfiguriertes System zu veranlassen, und das aufweist

▪ einen Komparator (12), der zum Vergleichen eines tatsächlichen Wertes (V1) mit einem Sollwert (V2) einer Variablen eingerichtet ist, die mit der Funktion des Katalysators in Beziehung steht und durch die Einspritzung des Reduktionsmittels betroffen ist, und zum Erzeugen eines Signals (S1), das die Übereinstimmung zwischen dem tatsächlichen Wert (V1) und dem Sollwert (V2) repräsentiert,

▪ einen Regler (13), der zum Erzeugen eines Steuersignals (v) auf Basis des Signals (S1) vom Komparator (12) eingerichtet ist, das auf die Reduktionsmitteleinspritzung eine Wirkung ausübt, und

▪ ein elektronisches Berechnungsmittel (11), das ein Rechenmodell verwendet, um kontinuierlich aktuelle Zustände im Katalysator zu bestimmen, wobei die erwarteten Reaktionen im Katalysator bei den jeweiligen Betriebsbedingungen berücksichtigt werden, **dadurch gekennzeichnet, dass** das Rechenmodell veranlasst wird,

- den Einfluss der Reduktionsmitteleinspritzung auf die Variable als einen Prozess erster Ordnung mit einem Verstärkungsfaktor (F) und einer Zeitkonstante ($\tau$) anzunähern,

- Momentanwerte dieses Verstärkungsfaktors (F) und dieser Zeitkonstante ($\tau$) auf Basis der vom Rechenmodell erhaltenen Informationen zu bestimmen, und

- Momentanwerte der Regelparameter des Reglers (13) auf Basis der so bestimmten Werte des Verstärkungsfaktors (F) und der Zeitkonstante ($\tau$) zu bestimmen.

13. Computerprogrammprodukt nach Anspruch 12, **dadurch gekennzeichnet, dass** das Computerprogrammprodukt ein Datenspeichermedium aufweist, das von einer elektronischen Steuereinheit gelesen werden kann, wobei der Computerprogrammcode auf dem Datenspeichermedium gespeichert ist.

**14.** Elektronische Steuereinheit für ein Kraftfahrzeug, die ein Ausführungsmittel (21), einen mit dem Ausführungsmittel verbundenen Speicher (23) und ein mit dem Ausführungsmittel verbundenes Datenspeichermedium (24) aufweist, wobei der Computerprogrammcode eines der Computerprogrammprodukts nach Anspruch 12 auf dem Datenspeichermedium (24) gespeichert ist.

**Revendications**

**1.** Procédé de détermination de paramètres de régulation d'un régulateur (13) qui fait partie d'un système (10) de commande de l'injection d'un agent de réduction en amont d'un catalyseur (4) dans une conduite d'échappement (2) d'un moteur à combustion (1) et qui, en fonction d'un signal (S1) qui est délivré par un comparateur (12) et qui dépend de la correspondance entre une valeur réelle (V1) et une valeur de consigne (V2) d'une variable associée à la fonction du catalyseur et affectée par l'injection de l'agent de réduction, génère un signal de commande (v) qui agit sur l'injection de l'agent de réduction, **caractérisé**

- **par** l'approximation de l'influence de l'injection de l'agent de réduction sur ladite variable sous la forme d'un processus du premier ordre avec un facteur d'amplification (F) et une constante de temps ($\tau$), ce pourquoi des valeurs instantanées de ce facteur d'amplification et de cette constante de temps sont déterminées en fonction d'informations provenant d'un modèle de calcul qui, tout en assurant les réactions attendues dans le catalyseur dans les conditions de fonctionnement respectives, détermine en continu des états courants dans le catalyseur, par exemple l'accumulation dans différentes parties du catalyseur d'une substance réductrice qui fait partie, ou est formée, de l'agent de réduction et la conversion d'une substance d'échappement qui se produit dans différentes parties du catalyseur sous l'influence de la substance réductrice, et
- par la détermination de valeurs instantanées desdits paramètres de régulation en fonction des valeurs ainsi déterminées dudit facteur d'amplification (F) et de ladite constante de temps ($\tau$).

**2.** Procédé selon la revendication 1, **caractérisé en ce que** ledit régulateur (13) est un régulateur PI et lesdits paramètres de régulation sont l'amplification P ($K_p$) et l'amplification I ($K_I$) du régulateur PI.

**3.** Procédé selon la revendication 1, **caractérisé en ce que** ledit régulateur (13) est un régulateur Otto Smith.

**4.** Procédé selon l'une quelconque des revendications 1 à 3, dans lequel le catalyseur (4) est un catalyseur RCS et de l'urée ou de l'ammoniac est utilisé en tant qu'agent de réduction, **caractérisé en ce que** ladite variable est le degré de couverture de l'ammoniac dans le catalyseur (4) ou dans une partie de celui-ci.

**5.** Procédé selon l'une quelconque des revendications 1 à 3, dans lequel le catalyseur (4) est un catalyseur RCS et de l'urée ou de l'ammoniac est utilisé en tant qu'agent de réduction, **caractérisé en ce que** ladite variable est le degré de conversion de NOx dans le catalyseur (4).

**6.** Procédé selon l'une quelconque des revendications 1 à 5, **caractérisé en ce qu'**au moins les valeurs d'entrée suivantes sont utilisées dans le modèle de calcul pour la génération d'informations pour la détermination dudit facteur d'amplification (F) et de ladite constante de température ($\tau$) :

- la température d'échappement (P1) en amont du catalyseur,
- la concentration en NOx (P2) dans les gaz d'échappement en amont du catalyseur,
- le débit massique d'échappement (P3) à travers le catalyseur, et
- les quantités injectées (P4) d'agent de réduction.

**7.** Système de commande de l'injection d'un agent de réduction en amont d'un catalyseur dans une conduite d'échappement d'un moteur à combustion, lequel système (10) comprend

- un comparateur (12) adapté pour comparer une valeur réelle (V1) et une valeur de consigne (V2) d'une variable qui est associée à la fonction du catalyseur et qui est affectée par l'injection de l'agent de réduction, et pour générer un signal (S1) qui représente la correspondance entre cette valeur réelle (V1) et cette valeur de consigne (V2),
- un régulateur (13) adapté pour générer, en fonction dudit signal (S1) provenant du comparateur (12), un signal de commande (v) qui agit sur l'injection de l'agent de réduction, et
- un moyen de calcul électronique (11) adapté pour utiliser un modèle de calcul pour déterminer en continu des états courants dans le catalyseur tout en tenant compte des réactions attendues dans le catalyseur dans des conditions de fonctionnement dominantes,

**caractérisé en ce que** ledit modèle de calcul est adapté pour :

- approximer l'influence de l'injection de l'agent de réduction sur ladite variable sous la forme d'un processus du premier ordre avec un facteur d'amplification (F) et une constante de temps ($\tau$),
- déterminer des valeurs instantanées de ce facteur d'amplification (F) et de cette constante de temps ($\tau$) en fonction d'informations provenant dudit modèle de calcul, et
- déterminer des valeurs instantanées de paramètres de régulation du régulateur (13) en fonction des valeurs ainsi déterminées dudit facteur d'amplification (F) et de ladite constante de temps ($\tau$).

8. Système selon la revendication 7, **caractérisé en ce que** ledit régulateur (13) est un régulateur PI et lesdits paramètres de régulation sont l'amplification P ($K_p$) et l'amplification I ($K_I$) du régulateur PI.

9. Système selon la revendication 7, **caractérisé en ce que** ledit régulateur (13) est un régulateur Otto Smith.

10. Système selon l'une quelconque des revendications 7 à 9, dans lequel le catalyseur est un catalyseur RCS et de l'urée ou de l'ammoniac est utilisé en tant qu'agent de réduction, **caractérisé en ce que** ladite variable est le degré de couverture de l'ammoniac dans le catalyseur ou dans une partie de celui-ci.

11. Système selon l'une quelconque des revendications 7 à 9, dans lequel le catalyseur est un catalyseur RCS et de l'urée ou de l'ammoniac est utilisé en tant qu'agent de réduction, **caractérisé en ce que** ladite variable est le degré de conversion de NOx dans le catalyseur.

12. Produit de programme informatique comprenant un code programme informatique pour amener un système qui est configuré pour commander l'injection d'un agent de réduction en amont d'un catalyseur dans une conduite d'échappement d'un moteur à combustion et qui comprend :

- un comparateur (12) adapté pour comparer une valeur réelle (V1) et une valeur de consigne (V2) d'une variable qui est associée à la fonction du catalyseur et qui est affectée par l'injection de l'agent de réduction, et pour générer un signal (S1) qui représente la correspondance entre cette valeur réelle (V1) et cette valeur de consigne (V2),
- un régulateur (13) adapté pour générer, en fonction dudit signal (S1) provenant du comparateur (12), un signal de commande (v) qui agit sur l'injection de l'agent de réduction, et
- un moyen de calcul électronique (11) adapté pour utiliser un modèle de calcul pour déterminer en continu des états courants dans le catalyseur tout en tenant compte des réactions attendues dans le catalyseur dans des conditions de fonctionnement dominantes,

**caractérisé en ce que** ledit modèle de calcul est amené à :

- approximer l'influence de l'injection de l'agent de réduction sur ladite variable sous la forme d'un processus du premier ordre avec un facteur d'amplification (F) et une constante de temps ($\tau$),
- déterminer des valeurs instantanées de ce facteur d'amplification (F) et de cette constante de temps ($\tau$) en fonction d'informations provenant dudit modèle de calcul, et
- déterminer des valeurs instantanées de paramètres de régulation du régulateur (13) en fonction des valeurs ainsi déterminées dudit facteur d'amplification (F) et de ladite constante de temps ($\tau$).

13. Produit de programme informatique selon la revendication 12, **caractérisé en ce que** le produit de programme informatique comprend un support de stockage de données qui est lisible par une unité de commande électronique, ledit code programme informatique étant stocké sur ledit support de stockage de données.

14. Unité de commande électronique pour un véhicule automobile, comprenant un moyen d'exécution (21), une mémoire (23) connectée au moyen d'exécution et un support de stockage de données (24) connecté au moyen d'exécution, le code programme informatique d'un produit de programme informatique selon la revendication 12 étant stocké sur ledit support de stockage de données (24).

Fig 1

10 ⟋

P1
P2
P3
P4

Kρ, KI

14

v

13

SI

12

V1

V2

+

8

Fig 2

20

21

23

24

22

Fig 3

Determine F and τ  ~A

Establish regulating parameters  ~B

Fig 4

**EP 2 425 106 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1706607 A1